# EUROPÄISCHE PATENTSCHRIFT

(11) **EP 2 391 567 B1**
(45) Veröffentlichungstag und Bekanntmachung des Hinweises auf die Patenterteilung: **08.04.2015**
(21) Anmeldenummer: 10701148.8
(22) Anmeldetag: 25.01.2010
(51) Int. Cl.: B66B 1/24

(54) **VERFAHREN ZUM BETRIEB EINER AUFZUGSANLAGE**
METHOD FOR OPERATING A LIFT ASSEMBLY
PROCÉDÉ DE FONCTIONNEMENT D'UNE INSTALLATION D'ASCENSEUR

(30) Priorität: 27.01.2009 EP 09151446
(43) Veröffentlichungstag der Anmeldung: 07.12.2011
(73) Patentinhaber: Inventio AG, 6052 Hergiswil (CH)
(72) Erfinder: FINSCHI, Lukas, CH-6030 Ebikon (CH); WEINBERGER, Karl, CH-6405 Immensee (CH)
(74) Vertreter: Blöchle, Hans
(86) Internationale Anmeldenummer: PCT/EP2010/050806
(87) Internationale Veröffentlichungsnummer: WO 2010/086290

(56) Entgegenhaltungen:
- EP-A- 1 553 038
- WO-A-02/066356
- WO-A1-2008/142785
- US-A- 4 448 286
- US-B1- 6 857 506

## Beschreibung

Die Erfindung betrifft ein Verfahren zum Betrieb einer Aufzugsanlage gemäss dem Oberbegriff des unabhängigen Patentanspruchs.

Die EP 1 876 129 A1 beschreibt ein Verfahren zum Vermindern des Energieverbrauchs einer Aufzugsanlage. Dabei wird die Aufzugsanlage alternativ in einen Operations-Modus oder in einen Stand-by-Modus gebracht. Der höchste Energieverbrauch tritt im Operations-Modus auf, während der Energieverbrauch im Stand-by-Modus niedriger ist. Mit Erfassungsmitteln wird ein Benutzungskriterium der Aufzugsanlage, wie eine Präsenz eines Passagiers in einer Aufzugskabine, erfasst. Auch werden Stand-by-Kriterien wie Zeitspannen mit geringem Verkehrsaufkommen festgelegt. Solange die Stand-by-Kriterien nicht erfüllt sind, wird die Aufzugsanlage im Operations-Modus belassen. Sobald ein Stand-by-Kriterium erfüllt ist und das Benutzungs-Kriterium nicht erfüllt ist, wird die Aufzugsanlage in den Stand-by-Modus gebracht.

Die US 6,857,506 B1 zeigt ein Verfahren zum Betreiben einer Aufzugsgruppe, wobei eine aufzugskabinenspezifische Energieverbrauchsdatei erzeugt wird, um den Energieverbrauch während einer Fahrt der Aufzugskabine für unterschiedliche Zuladungen zu beschreiben. Stockwerkrufe und Aufzugskabinenrufe werden den Aufzugskabinen so zugeteilt, dass der Energieverbrauch zum Bedienen der Gesamtheit der Rufe minimal ist.

Eine Aufgabe der vorliegenden Erfindung besteht darin, ein Verfahren zum Betrieb einer Aufzugsanlage anzugeben, bei dem Energieverbrauchsdaten ermittelt werden und zur weiteren Verwendung zur Verfügung stehen.

Diese Aufgabe wird mit einem Verfahren mit den Merkmalen des unabhängigen Patentanspruchs gelöst. Danach werden bei dem Verfahren ein **Energieverbrauch** von mindestens einem Energieverbraucher der Aufzugsanlage und mindestens eine **Verkehrssituation** der Aufzugsanlage erfasst. Mit dem erfassten Energieverbrauch und der erfassten Verkehrssituation wird mindestens ein **Energieverbrauchswert** ermittelt. Dieser ermittelte Energieverbrauchswert wird auf mindestens einem Ausgabemittel ausgegeben und steht so für eine weitere Verwendung zu Verfügung. Die Ermittlung des Energieverbrauchswerts, also die Verknüpfung von Energieverbrauch und Verkehrssituation, erfolgt durch mindestens eine Auswertevorrichtung. Dies hat den Vorteil, dass je nach Verkehr situativ ein Energieverbrauchswert ermittelt und ausgegeben wird. Der Energieverbrauchswert informiert über den Energieverbrauch eines Energieverbrauchers, was einen energiebewussten Betrieb der Aufzugsanlage ermöglicht.

Die US 6,857,596 beschreibt für die dort zu erstellende Energieverbrauchsdatei eine Erfassung des tatsächlichen Energieverbrauchs. Abhängig von einem jeweiligen Abfahrt- und Ankunft-oder Zielstockwerk sowie im Weiteren abhängig von einer jeweiligen Zuladung werden individuelle Daten für den jeweiligen Energieverbrauch in Abhängigkeit von der jeweiligen Verkehrssituation (Abfahrtstockwerk, Zielstockwerk, Zuladung) erfasst. Ein Energieverbrauchswert, der als einzelne Zahl eine Aussage über die Effizienz, mit der die Aufzugsanlage betrieben wird, macht, wird dabei nicht ausgegeben. Wenn z. B. zwölf Passagiere vom ersten Stockwerk als Abfahrtstockwerk in das das zehnte Stockwerk als Zielstockwerk fahren, wird nach der US 6,857,596 ein Energieverbrauch zugrunde gelegt, der die vergleichsweise hohe Zuladung und die Fahrtstrecke berücksichtigt. Der Energieverbrauchswert nach der Erfindung berücksichtigt z. B. die zwölf beförderten Passagiere als Verkehrssituation. Nachdem jeder Passagier auch alleine fahren könnte, ist der ermittelte Energieverbrauchswert bei gleichzeitigem Transport mehrerer Passagiere geringer als beim Transport einzelner Passagiere und bringt so zum Ausdruck, dass die aufgewandte Energie effizienter genutzt wird.

Wenn der Energieverbrauchswert den beförderten Passagieren in der Aufzugskabine angezeigt wird, ist für diese unmittelbar erkennbar, dass z. B. eine gemeinsame Benutzung der Aufzugsanlage energiesparend ist. Benutzer werden dies bei kontinuierlicher Benutzung der Aufzugsanlage aufgrund der Anzeige auf dem mindestens einen Ausgabemittel erkennen und haben die Möglichkeit, ihr Benutzungsverhalten der Aufzugsanlage darauf abzustellen. Eine Anzeige des bloßen Energieverbrauchs (das bei der US 6,857,596 zugrunde gelegte Datum) macht in diesem Szenario hingegen keinen Sinn, denn normalerweise - abhängig von der jeweiligen Fahrrichtung und einem daraus resultierenden Motor- oder Generatorbetrieb sowie Gegengewichten oder dergleichen - ist der Energieverbrauch für die einzelne Fahrt mit mehreren Passagieren höher als bei einer einzelnen, ansonsten gleichen Fahrt mit nur einem Passagier. Eine Anzeige des Energieverbrauchs könnte also ungünstigerweise sogar dazu führen, dass Fahrten mit hohem (momentanen) Energieverbrauch gerade vermieden würden, was aber selbstverständlich den gesamten Energieverbrauch erhöhen müsste.

Vorteilhafte Weiterbildungen des Verfahrens sind in den abhängigen Patentansprüchen beschrieben.

Zur **Erfassung des Energieverbrauchs** ist mindestens eine Energiemessvorrichtung vorgesehen, die bevorzugt lokal am Energieverbraucher platziert ist. Bevorzugt wird zusätzlich oder alternativ die jeweilige Wirkleistung als tatsächlicher Energieverbrauch erfasst.

Zur **Erfassung der Verkehrssituation** werden Signale aus dem technischen Prozess, nämlich der Aufzugsanlage, ausgewertet. Zum Erhalt solcher Signale kommt ein Sensor in Betracht, der z. B. kabinenspezifische Daten, wie z. B. eine Zuladung einer Aufzugskabine, an eine Auswertevorrichtung und/oder Zielrufsteuerung und/oder Aufzugssteuerung kommuniziert.

Vorteilhaft werden zur Erfassung der Verkehrssituation zusätzlich oder alternativ als Signale aus dem technischen Prozess von einer Zielrufsteuerung und/oder Aufzugssteuerung eine Anzahl Rufe pro Zeiteinheit erfasst. Ebenso kommt zur Erfassung der Verkehrssituation in Betracht, dass von der Zielrufsteuerung und/oder Aufzugssteuerung eine Anzahl Passagiere ermittelt wird, welche von der Aufzugsanlage in einer Zeiteinheit im Gebäude befördert worden sind. Weiterhin kommt in Betracht, als Passagierfluss im Gebäude, und damit als Verkehrssituation, eine Anzahl von Passagieren, welche in einer Zeiteinheit von der Aufzugsanlage von Rufeingabestockwerken auf Zielstockwerke befördert worden sind, zugrunde zu legen.

Vorteilhaft werden der erfasste Energieverbrauch und/oder die erfasste Verkehrssituation in mindestens einem computerlesbaren Datenspeicher abgespeichert, so dass die abgespeicherten Daten für eine spätere Verwendung identifizierbar und aus dem Datenspeicher abrufbar sind. Der Energieverbrauchswert ist dann von der Auswertevorrichtung auch auf der Basis abgerufener Daten ermittelbar. In diesem Fall muss ein Energieverbrauch und/oder eine Verkehrssituation nur identifiziert werden und kann dann geladen werden, was eine erneute Erfassung unnötig macht. Gleiches gilt entsprechend auch für den Energieverbrauchswert.

Vorteilhaft werden von der Auswertevorrichtung zur Erfassung des Energieverbrauchs und/oder zur Erfassung der Verkehrssituation Energieverbrauch bzw. Verkehrssituation simuliert, so dass sich mit dem simulierten Energieverbrauch und/oder der simulierten Verkehrssituation bereits vor Installation der Aufzugsanlage ein zukünftiger Energieverbrauchswert ermitteln lässt.

Vorteilhaft werden zur Erfassung der Verkehrssituation Signale von unterschiedlichen, spezialisierten Vorrichtungen ausgewertet, so dass sich eine gewisse Redundanz und Überbestimmung der Kenngrössen ergibt und gezielt eine Korrektur oder Bestätigung der erfassten Verkehrssituation möglich ist, was wiederum zu einer korrekten und bestätigten Bestimmung des Energieverbrauchswerts führt. Beispielsweise werden zur Erfassung der Verkehrssituation zunächst Signale verarbeitet, die von der Zielrufsteuerung und/oder Aufzugssteuerung an die Auswertevorrichtung kommuniziert werden. Wenn auch die Zuladung der Aufzugskabine mit einem Sensor erfasst wird, sind die von dort an die Auswertevorrichtung kommunizierten Signale zur Korrektur oder Bestätigung der erfassten Verkehrsituation verwendbar.

Der ermittelte Energieverbrauchswert ist vorteilhaft für unterschiedlichste Bezugsgrößen bestimmbar, z. B. als Energieverbrauchswert für genau einen Energieverbraucher oder als Energieverbrauchswert für genau einen Energieverbraucher und für eine bestimmte Zeiteinheit. Als weitere Bezugsgrößen kommen in Betracht: die Aufzugsanlage, die Aufzugsanlage und eine Zeiteinheit, die Aufzugsanlage und eine Verkehrssituation, eine Aufzugskabine, die Aufzugskabine und eine Zeiteinheit. Ebenso lassen sich ein einzelner Passagier, ein Passagier und eine Zeiteinheit oder ein Passagier und eine Verkehrssituation als Bezugsgröße heranziehen, so dass spezifizierte Energieverbrauchswerte für den Transport eines einzelnen Passagiers zur Verfügung stehen. Entsprechend kommt auch in Betracht, einen Energieverbrauch pro Ruf, pro Fahrt, pro Fahrt und Zeiteinheit, pro Fahrt und Verkehrssituation oder einen Energieverbrauch pro Zone zugrunde zu legen. Kombinationen aller dieser Bezugsgrößen sind ebenfalls möglich, z. B.: Aufzugsanlage, Zeiteinheit und Verkehrssituation oder Aufzugskabine, Zeiteinheit und Passagier und so weiter. Im Ergebnis kann eine Mehrzahl von Energieverbrauchswerten zur Verfügung gestellt werden, und zwar sowohl solche, die einen Gebäudeverwalter interessieren, der das Gebäude mit der Aufzugsanlage verwaltet und betreibt, als auch solche, die den Passagier interessieren, der mit der Aufzugsanlage im Gebäude verfahren wird.

Vorteilhaft wird auf Basis mindestens eines ermittelten Energieverbrauchswerts oder einer Mehrzahl ermittelter Energieverbrauchswerte ein energiesparender Betrieb der Aufzugsanlage an-oder ausgewählt. Der mindestens eine Energieverbrauchswert oder einer der Energieverbrauchswerte kann daraus resultieren, dass keine Fahrt ausgewählt ist. Mehrere Energieverbrauchswerte können sich z. B. ergeben, wenn unterschiedliche Verkehrssituationen zugrunde gelegt werden. Für einen Kabinen- oder Stockwerkruf können z. B. eine direkte Fahrt und ein daraus resultierender erster Energieverbrauchswert zugrunde gelegt werden. Ein zweiter Energieverbrauchswert kann für eine direkte Fahrt bei einer minimalen Wartezeit ermittelt werden. Ein dritter Energieverbrauchswert kann für eine direkt Fahrt und eine erhöhte Wartezeit ermittelt werden. Weitere Energieverbrauchswerte können zu Verkehrssituationen ermittelt werden, wenn für die Fahrt Zwischenstopps, etwa um weitere Passagiere aus- oder zusteigen zu lassen, oder Umwege, um zunächst andere Passagiere aus- oder zusteigen zu lassen, zugelassen werden. Nochmals weitere Energieverbrauchswerte können ermittelt werden, wenn zugelassen wird, dass anstelle des Start- oder Zielstockwerks die Aufzugskabine in einem anderen Stockwerk betreten oder verlassen wird. Die vorstehenden Beispiele sind - wie oben und nachfolgend beschrieben - um weitere Ermittlungsgrundlagen ergänzbar und untereinander kombinierbar. Aus einer Mehrzahl angezeigter Energieverbrauchswerte ist einer zur Spezifikation der Fahrt an-und/oder auswählbar. Bei nur einem angezeigten Energieverbrauchswert ist dieser an- und/oder auswählbar

Zur Unterstützung der An- oder Auswahl des energiesparenden Betriebs wird mindestens ein ermittelter Energieverbrauchswert auf einem Ausgabemittel einer Zentrale und/oder Rufeingabevorrichtung ausgegeben. Aus einer Mehrzahl ermittelter Energieverbrauchswerte kann eine Untermenge der ermittelten Werte ausgegeben werden, so dass z. B. eine Ausgabe ungünstiger Werte unterbleibt. Des Weiteren kann eine Differenz verschiedener, ermittelter Energieverbrauchswerte vorgesehen sein. Eine interessierte Person, also z. B. in der Zentrale ein Gebäudeverwalter oder an der Rufeingabevorrichtung ein Passagier, kann auf Basis des ausgegebenen Energieverbrauchswerts einen energiesparenden Betrieb der Aufzugsanlage anwählen oder auswählen. Unter **Anwählen** wird eine persönliche Wahl eines Energieverbrauchswertes der interessierten Person verstanden. Unter **Auswählen** wird eine Festlegung des tatsächlich für die Fahrt zu verwendenden Energieverbrauchswerts verstanden. Im einfachsten Fall findet mit der Anwahl eines Energieverbrauchswerts auch gleichzeitig eine Auswahl dieses Energieverbrauchswertes statt. Zur weiteren Unterstützung der An- oder Auswahl werden nicht nur der oder jeder jeweilige Energieverbrauchswert, sondern auch die zugrunde liegenden Daten, z. *B.* die Verkehrssituation, insbesondere in einem Klartext, ausgegeben. Eine Klartextausgabe der Verkehrssituation kann einen Passagier bei einem Stockwerkruf darauf aufmerksam machen, dass die An- oder Auswahl eines ersten Energieverbrauchswerts mit einer erhöhten Wartezeit und ein anderer Energieverbrauchswert mit einem Zwischenstopp einhergehen. Die An-oder Auswahl kann auf dieser Basis von der jeweils interessierten Person informiert getroffen werden.

Neben der Anwahl an der Rufeingabevorrichtung kann an anderer Stelle, z. B. gemäß einer Vorgabe oder durch den Gebäudeverwalter, zumindest ein Energieverbrauchswert angewählt sein. Eine derartige Anwahl kann automatisch erfolgen, z. B. indem ein vorgegebenes oder vorgebbares Kriterium zugrunde gelegt wird. Als ein derartiges Kriterium kommt z. B. ein nicht zu überschreitender Schwellenwert in Betracht. Für die Fahrt wird aus einer Mehrzahl angewählter Energieverbrauchswerte ein Energieverbrauchswert gemäss mindestens einer Auswahlregel insbesondere automatisch ausgewählt. Vorteilhaft erfolgt das Auswählen auf Basis einer hierarchischen Auswahlregel, so dass z. B. eine Anwahl eines Gebäudeverwalters stärker gewichtet wird als eine Anwahl eines Passagiers. Andere Aspekte, die mit einer solchen Auswahlregel Berücksichtigung finden können, sind, dass eine Anwahl eines VIP-Passagiers stärker gewichtet wird als eine Anwahl eines Nicht-VIP-Passagiers, dass eine Anwahl eines benachteiligten Passagiers stärker gewichtet wird als eine Anwahl eines nicht benachteiligten Passagiers (benachteiligungsgerechte Auswahl), dass ein am meisten angewählter Energieverbrauchswert ausgewählt oder stärker gewichtet wird (demokratische Auswahl), dass ein zuerst angewählter Energieverbrauchswert ausgewählt oder stärker gewichtet wird (zeitliche Auswahl), dass ein angewählter Energieverbrauchswert zufällig ausgewählt (zufällige Auswahl) wird und so weiter. Ein benachteiligter Passagier ist ein körperlich und/oder geistig Behinderter. Ein benachteiligter Passagier kann aber auch ein Passagier mit sperrigem Gut, mit schwerem Gepäck, mit einem Krankentransport, mit Gefahrengut usw. sein. Wenn die angewandte Auswahlregel den Passagieren bekannt ist, wird sie von diesen auch verstanden und akzeptiert.

Dies hat den Vorteil, dass falls unterschiedliche Energieverbrauchswerte für eine Fahrt angewählt worden sind, einer dieser Energieverbrauchswerte gemäss einer definierten Auswahlregel oder einer Kombination mehrerer Auswahlregeln ausgewählt werden kann, z. B. wenn mehrere Passagiere gemeinsam in derselben Aufzugskabine befördert werden. Ausserdem kann z. B. ein Gebäudeverwalter festlegen, dass zu Stoßzeiten mit viel Verkehr im Gebäude keine tiefen Energieverbrauchswerte ausgewählt werden, weil eine solche Auswahl mit Leistungseinbußen der Aufzugsanlage einhergeht. Umgekehrt kann der Gebäudeverwalter festlegen, dass ausserhalb von Stoßzeiten, wo wenig Verkehr im Gebäude herrscht, nur möglichst tiefe Energieverbrauchswerte ausgewählt werden können, was energiesparsam ist. Für die Durchführung der automatischen Auswahl gemäß der oder jeder Auswahlregel kommen bevorzugt die Auswertevorrichtung, die Zielrufsteuerung, die Aufzugssteuerung, die oder jede Rufeingabevorrichtung oder eine Zentrale in Betracht. Dies hat den Vorteil, dass die Auswahl eines Energieverbrauchswerts in flexibler Art und Weise durch verschiedene Bestandteile der Aufzugsanlage vorgenommen werden kann. Wenn die Aufzugsanlage eine Zielrufsteuerung aufweist, kann diese nicht nur eine Rufzuteilung, sondern auch die Auswahl des Energieverbrauchswerts vornehmen.

Bevorzugt wird zum Betrieb der Aufzugsanlage mit dem ausgewählten Energieverbrauchswert dieser an mindestens eine Zielrufsteuerung und/oder Aufzugssteuerung kommuniziert und mindestens ein Bestandteil der Aufzugsanlage wird von der Zielrufsteuerung und/oder Aufzugssteuerung in mindestens einem mit dem ausgewählten Energieverbrauchswert verknüpften Betriebsmodus betrieben. Dies hat den Vorteil, dass sowohl die gesamte Aufzugsanlage als auch einzelne Bestandteile derselben mit dem ausgewählten Energieverbrauchswert betreibbar sind.

Bevorzugt wird der Energieverbrauchswert der Aufzugsanlage vor deren Installation ermittelt. Bevorzugt wird die Aufzugsanlage auf Basis des ermittelten Energieverbrauchswerts installiert. Besonders bevorzugt wird für eine installierte oder zu installierende Aufzugsanlage ein Energieverbrauchs-Garantiezertifikat (Zertifikat) ausgegeben, wonach der tatsächliche Energieverbrauchswert der Aufzugsanlage nach abgeschlossener Installation den ermittelten Energieverbrauchswert garantiert nicht überschreiten wird. Beim Betrieb der Aufzugsanlage kann ein kontinuierlicher oder zyklischer Vergleich tatsächlicher Energieverbrauchswerte mit dem Energieverbrauchswert gemäß dem Zertifikat erfolgen. Dies hat den Vorteil, dass eine gezielt energiesparsame Aufzugsanlage geplant und ausgeschrieben und daraufhin auch installiert wird. Auch kann die Einhaltung des Energieverbrauchswerts durch Ausgabe eines Energieverbrauchs-Garantiezertifikats überprüft und/oder bestätigt werden.

Vorteilhaft wird zum Bedienen mindestens eines Rufs und/oder mindestens eines Identifikationscodes von mindestens einer Zielrufsteuerung und/oder Aufzugssteuerung mindestens eine Fahrt von mindestens einer Aufzugskabine ermittelt. Die oder jede Fahrt wird, z. B. durch die Auswertevorrichtung, mit jeweils mindestens einem Energieverbrauchswert verknüpft. An mindestens einer Rufeingabevorrichtung wird aus dem mindestens einen verknüpften Energieverbrauchswert einer ausgewählt und ein Ruf und/oder Identifikationscode wird von der Zielrufsteuerung und/oder Aufzugssteuerung mit der mit dem ausgewählten Energieverbrauchswert verknüpften Fahrt bedient. Dies hat den Vorteil, dass für einen vom Passagier getätigten Ruf mehrere mögliche Fahrten oder eine Fahrt mit unterschiedlichen Energieverbrauchswerten ermittelt werden. Es ergibt sich also eine Mehrzahl von Energieverbrauchswerten und durch Anwahl und/oder Auswahl eines der Energieverbrauchswerte ergibt sich ein energiesparender Betrieb.

Die Erfindung betrifft auch eine Aufzugsanlage zur Durchführung des vorgenannten Verfahrens, bei welcher der Energieverbraucher mindestens ein Aufzugsantrieb und/oder ein Türantrieb und/oder eine Aufzugskabinenbeleuchtung, usw. ist. Dies hat den Vorteil, dass gleichzeitig oder alternativ der Energieverbrauch von mehreren, sehr unterschiedlichen Energieverbrauchern der Aufzugsanlage erfassbar und somit für eine objektive Entscheidung über den energiebewussten Betrieb der Aufzugsanlage verwendbar ist.

Vorteilhaft wertet mindestens eine Auswertevorrichtung den erfassten Energieverbrauch und die erfasste Verkehrssituation aus und ermittelt den Energieverbrauchswert. Die Auswertevorrichtung kann als eine eigenständige Vorrichtung oder als Bestandteil folgender Vorrichtungen ausgeführt sein: einer Energiemessvorrichtung, einer Zielrufsteuerung, einer Aufzugssteuerung, einer Rufeingabevorrichtung, einer Zentrale, und so weiter. Die Auswertevorrichtung ist damit flexibel platzierbar.

Die Energiemessvorrichtung und die Auswertevorrichtung, letztere auch in ihrer Ausführung als Bestandteil einer weiteren Vorrichtung, sind kommunikativ verbunden oder verbindbar. Zur kommunikativen Verbindung kommt ein Bussystem, insbesondere in einer Ausführung als bidirektionaler Bus, in Betracht. Dies hat den Vorteil, dass die Bestandteile der Aufzugsanlage die zur Ermittlung des Energieverbrauchswerts notwendigen Informationen untereinander austauschen können.

Zur Ausgabe des ermittelten Energieverbrauchswerts ist mindestens ein Ausgabemittel vorgesehen. Als Anbringungsort für das mindestens eine Ausgabemittel kommen eine Zentrale und/oder eine Rufeingabevorrichtung in Betracht. Dies hat den Vorteil, dass der Energieverbrauchswert am Ort des Interesses, d.h. in einer Zentrale beim Gebäudeverwalter oder an einer Rufeingabevorrichtung beim Passagier, ausgegeben wird. Anhand des ausgegebenen Energieverbrauchswerts kann eine interessierte Person über den energiebewussten Betrieb der Aufzugsanlage entscheiden, indem sie einen Energieverbrauchswert anwählt und/oder auswählt.

Die Erfindung betrifft auch ein Computerprogrammprodukt, auf dem ein Computerprogramm mit Programmcodeanweisungen zur Implementation der Erfindung und evtl. ihrer Ausgestaltungen gespeichert ist. Zur Ausführung des Computerprogramms kommen zumindest folgende Einheiten in Betracht, die dafür in an sich bekannter Art und Weise eine Verarbeitungseinheit nach Art eines Prozessors und einen Speicher aufweisen: Energiemessvorrichtung, Auswertevorrichtung, Zielrufsteuerung, Aufzugssteuerung, Rufeingabevorrichtung und Zentrale.

Anhand der Figuren werden Ausführungsbeispiele der Erfindung im Detail erläutert. Hierzu zeigen, teilweise schematisiert:
- Fig. 1: ein erstes Ausführungsbeispiel eines Teils einer Aufzugsanlage;
- Fig. 2: ein zweites Ausführungsbeispiel eines Teils einer Aufzugsanlage;
- Fig. 3: ein erstes Ausführungsbeispiel eines Teils einer Rufeingabevorrichtung der Aufzugsanlage gemäss Fig. 1 oder 2;
- Fig. 4: ein zweites Ausführungsbeispiel eines Teils einer Rufeingabevorrichtung der Aufzugsanlage gemäss Fig. 1 oder 2;
- Fig. 5: ein Ausführungsbeispiel eines auf einem Ausgabemittel einer Zentrale ausgegebenen Energieverbrauchswerts der Aufzugsanlage gemäss Fig. 1 oder 2;
- Fig. 6: ein Ausführungsbeispiel eines auf einem Ausgabemittel der Rufeingabevorrichtung gemäss Fig. 3 ausgegebenen Energieverbrauchswerts der Aufzugsanlage gemäss Fig. 1 oder 2; und
- Fig. 7: ein Flussdiagramm mit Verfahrensschritten des Verfahrens zum energiesparenden Betrieb der Aufzugsanlage gemäss Fig. 1 oder 2.

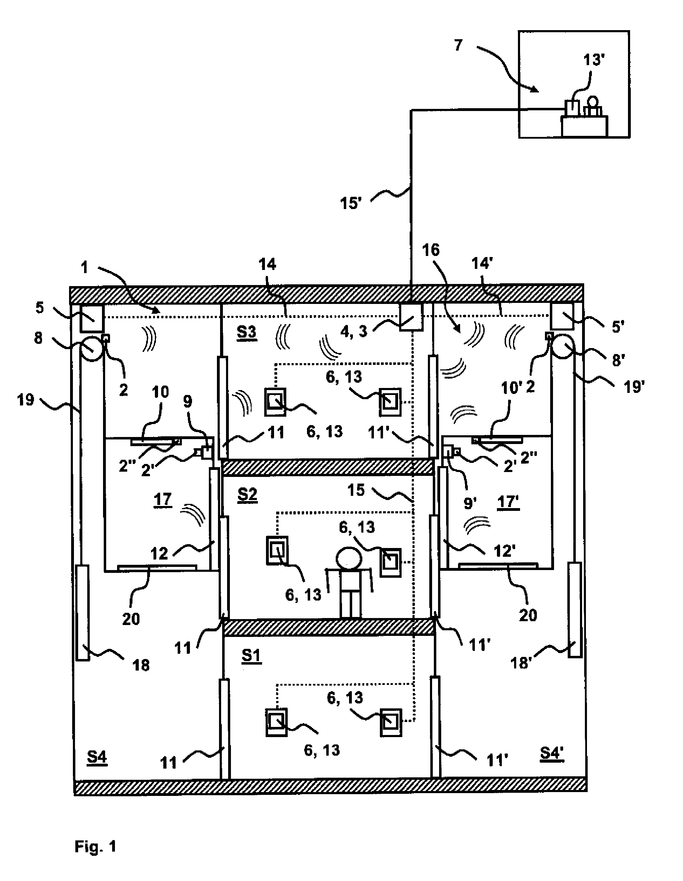

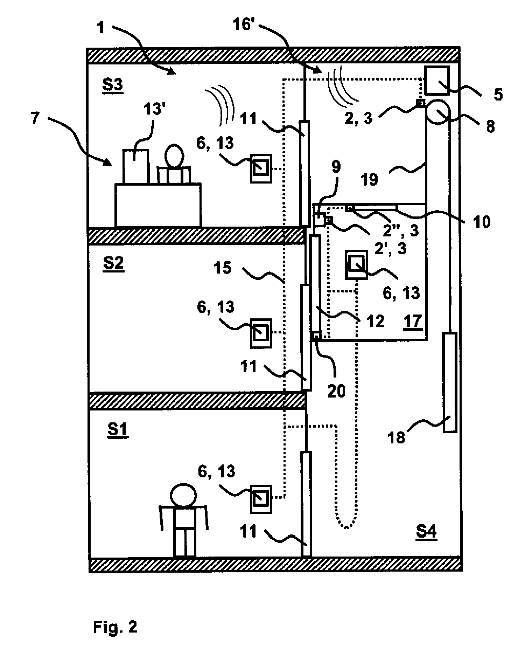

Fig. 1 und 2 zeigen zwei Ausführungsbeispiele eines Teils einer Aufzugsanlage 1 in einem Gebäude. Auf jedem Stockwerk S1-S3 kann ein Passagier über mindestens eine Aufzugstür 11, 11', 12, 12' die Aufzugskabine 17, 17' (mit Aufzugskabinenbeleuchtung 10) betreten und/oder verlassen. In mindestens einem Aufzugsschacht S4, S4' ist die Aufzugskabine 17, 17' über mindestens ein Tragmittel 19, 19' mit mindestens einem Gegengewicht 18, 18' verbunden.

Die aktuelle Zuladung der Aufzugskabine 17, 17' wird von mindestens einem Sensor 20 erfasst. Der Sensor 20 liefert zur Erfassung der Verkehrssituation Sensordaten als Signal aus dem technischen Prozess, nämlich der Aufzugsanlage 1. Als Sensor 20 kommen eine Lastmatte, ein Lichtvorhang, ein Bewegungsmelder, eine Kamera, ein Antriebsdrehmoment-Messaufnehmer usw. in Betracht. Gemäss Fig. 1 ist der Sensor 20 eine Lastmatte. Gemäss Fig. 2 ist der Sensor 20 ein Bewegungsmelder. Eine Lastmatte erfasst ein Gewicht eines auf ihr stehenden Passagiers. Bei einem z. B. im Bereich der Türschwelle der Aufzugskabine 17, 17' vorgesehenen, als Sensor 20 fungierenden Lichtvorhang wird dieser (teilweise) unterbrochen, sobald ein Passagier beim Besteigen oder Verlassen der Aufzugskabine 17, 17' über die Türschwelle tritt. Als Zuladung ist damit die Anwesenheit (oder Abwesenheit) eines Passagiers oder mehrerer Passagiere in der Aufzugskabine 17, 17' erfassbar.

Ein Infrarotsensor als Sensor 20 erfasst in an sich bekannter Art und Weise Wärmebilder der von Passagieren ausgesandten Wärmestrahlung, so dass als Zuladung die An- oder Abwesenheit von Passagieren in der Aufzugskabine 17, 17' erfassbar ist. Weitere Ausführungsformen für einen Sensor 20 sind ein Ultraschallsensor und eine insbesondere digitale Kamera. Die Verwendung einer Kamera hat den Vorteil der Verwendbarkeit von Zoomobjektiven und /oder beweglichen Halterungen, z. B. in Form eines motorbetätigten Stativs. Selbsttätig oder ferngesteuert lässt sich so eine Orientierung eines Kameraobjektivs verändern. Die Kamera kann mit einer Beleuchtungseinrichtung kombiniert sein, um die Funktion als Sensor 20 auch bei ungünstigen Lichtverhältnissen sicherzustellen.

Ein Antriebsdrehmoment-Messaufnehmer als Sensor 20 erfasst mindestens eine elastische Deformation mindestens eines Teils des Aufzugsantriebs 8, 8', beispielsweise eines Bremshebels. Diese elastische Verformung lässt sich über mindestens einen Dehnungsmessstreifen und mindestens eine Auswertesteuerung in Sensordaten umformen. In Lernfahrten werden elastische Deformationen einer mehr oder weniger vollen Aufzugskabine 17, 17' erfasst und als Referenzdaten mit einer zugeordneten Zuladung gespeichert. Die Zuladung wird somit indirekt erfasst.

Je nach Art des Sensors 20 lassen sich erfasste Sensordaten mit gespeicherten Referenzdaten vergleichen. Die Zuladung derjenigen Referenzdaten, die mit den erfassten Sensordaten weitgehend übereinstimmen, gilt dann als aktuelle erfasste Zuladung der Aufzugskabine 17, 17'.

Der Sensor 20 weist mindestens einen Prozessor, mindestens einen computerlesbaren Datenspeicher, mindestens einen Adapter für ein Bus-System 15, 15' und/oder mindestens einen Adapter für mindestens ein Funkfeld 16, 16' sowie eine elektrische Stromversorgung auf. Aus dem computerlesbaren Datenspeicher wird mindestens ein Kommunikations-Computerprogramm geladen und durch den Prozessor ausgeführt. Das Kommunikations-Computerprogramm steuert die Kommunikation des Sensors 20 mit mindestens einer Auswertevorrichtung 3 und/oder Zielrufsteuerung 4 und/oder Aufzugssteuerung 5, 5'.

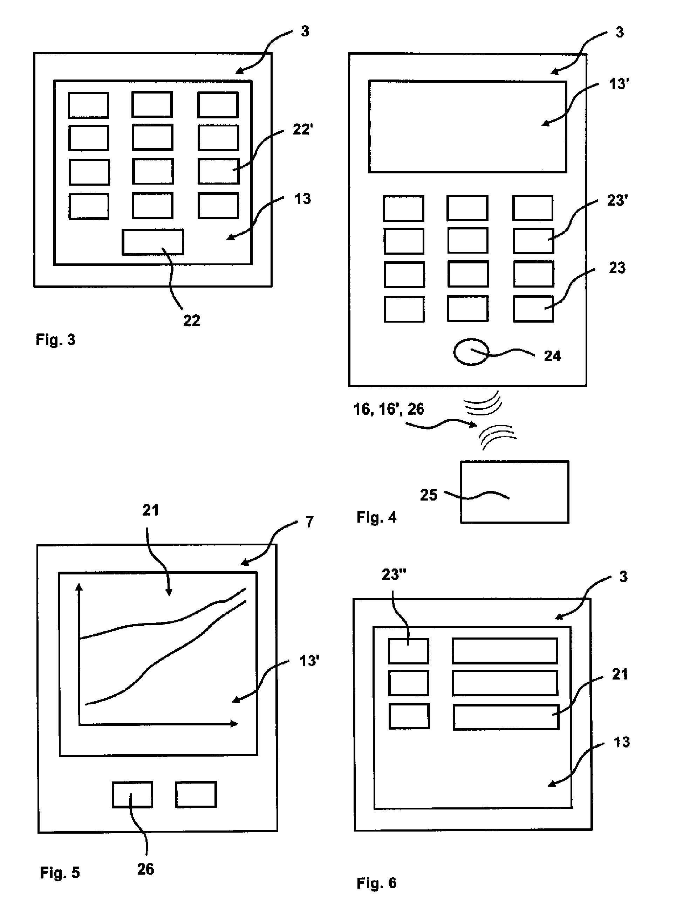

Mindestens eine Rufeingabevorrichtung 6 ist nahe einer Stockwerkstür 11, 11' und/oder in einer Aufzugskabine 17 angeordnet. Die Rufeingabevorrichtung 6 ermöglicht einem Passagier eine Rufeingabe. Fig. 3 zeigt eine tastenlose Rufeingabevorrichtung 6, bei der eine Bereitstellung eines Rufs durch Berühren mindestens eines Feldes 22, 22' auf dem Tastschirm 13 erfolgt. Fig. 4 zeigt eine Rufeingabevorrichtung 6 mit Eingabetasten 23, 23'. Die Rufeingabe kann auch berührungslos erfolgen. Dazu zeigt Fig. 4 eine Rufeingabevorrichtung 6 mit einer Sende-/Empfangsvorrichtung 24 für den Empfang von Identifikationscodes in mindestens einem Funkfeld 16, 16', 26. Ein solcher Identifikationscode wird von einem von einem Passagier getragenen mobilen Gerät 25 abgestrahlt. Das mobile Gerät 25 ist beispielsweise ein Radio Frequency Identification Device (RFID) und/oder ein Mobiltelefon und/oder ein mobiler Computer.

Mindestens eine Aufzugssteuerung 5, 5' weist mindestens einen Prozessor und mindestens einen computerlesbaren Datenspeicher auf. In mindestens einem Gehäuse der Aufzugssteuerung 5, 5' sind mindestens ein Adapter für mindestens eine Signalleitung 14, 14' und/oder mindestens ein Adapter für mindestens ein Bus-System 15, 15' und/oder mindestens ein Adapter für mindestens ein Funkfeld 16, 16' sowie eine elektrische Stromversorgung angeordnet. Gemäss Fig. 2 übermittelt der Sensor 20 Sensordaten im Bus-System 15 an die Aufzugssteuerung 5. Ferner übermittelt die Rufeingabevorrichtung 6 gemäss Fig. 2 im Bus-System 15 einen vom Passagier getätigten Ruf als Stockwerkruf und/oder als Kabinenruf an die Aufzugssteuerung 5. Ein vom Prozessor ausgeführtes Computerprogramm steuert den Aufzugsantrieb 8, 8' und den Türantrieb 9, 9' an und liest Sensordaten des Sensors 20 ein. Das Computerprogramm ermittelt für einen Stockwerkruf mindestens eine Rufzuteilung. Die Rufzuteilung bezeichnet grundsätzlich eine Fahrt mit einer Aufzugskabine 17 auf das Rufeingabestockwerk bei möglichst kurzer Wartezeit. Für einen Stockwerkruf wird zuerst eine Aufzugskabine 17 auf das Stockwerk der Rufeingabevorrichtung 6 verfahren. Erst nachdem der Passagier die Aufzugskabine 17 betreten hat, wird auf einer Rufeingabevorrichtung 6 der Aufzugskabine 17 ein Kabinenruf auf ein Zielstockwerk getätigt und die Aufzugskabine 17 wird auf dieses Zielstockwerk verfahren.

Mindestens eine Zielrufsteuerung 4 weist hinsichtlich Prozessor, Datenspeicher, Adapter usw. eine grundsätzlich vergleichbare Konfiguration wie die Aufzugssteuerung 5, 5' auf. Gemäss Fig. 1 ist die Zielrufsteuerung 4 eine eigenständige elektronische Einheit in mindestens einem eigenen Gehäuse, die beispielsweise im Stockwerk S3 platziert ist. Die Zielrufsteuerung 4 kann auch ein elektronischer Einschub beispielsweise in Form einer Leiterplatte sein, welche im Gehäuse einer Rufeingabevorrichtung 6, 6' und/oder einer Aufzugssteuerung 5, 5' angeordnet ist. Gemäss Fig. 1 übermittelt der Sensor 20 Sensordaten im Funkfeld 16 an die Zielrufsteuerung 4. Gemäss Fig. 1 übermittelt die Rufeingabevorrichtung 6 im Bus-System 15 einen vom Passagier getätigten Ruf als Zielruf an die Zielrufsteuerung 4. Bei einem Zielruf erfolgt bereits bei der Rufeingabe eine Bezeichnung eines gewünschten Zielstockwerks, so dass kein Kabinenruf mehr nötig ist. Somit kennt die Zielrufsteuerung 4 bereits bei der Rufeingabe das Zielstockwerk und kann daher nicht nur das Anfahren des Rufeingabestockwerks, sondern auch das Anfahren des Zielstockwerks optimieren. Ein vom Prozessor der Zielrufsteuerung 5 ausgeführtes Computerprogramm liest die übermittelten Sensordaten und den übermittelten Zielruf ein. Das Computerprogramm ermittelt für einen Zielruf mindestens eine günstigste Rufzuteilung. Die günstigste Rufzuteilung bezeichnet grundsätzlich eine Fahrt mit mindestens einer Aufzugskabine 17, 17' von einem Abfahrtstockwerk zu einem Ankunftsstockwerk bei möglichst kurzer Wartezeit und/oder möglichst kurzer Zielzeit. Das Abfahrtstockwerk muss nicht mit dem Rufeingabestockwerk übereinstimmen. Auch das Ankunftstockwerk muss nicht mit dem vom Passagier gemäss Zielruf gewünschte Zielstockwerk übereinstimmen. So kann das Computerprogramm Passagiere aus mehreren Rufeingabestockwerken in einem Abfahrtstockwerk bündeln und/oder Passagiere, die auf verschiedene Zielstockwerke gelangen möchten, auf ein Ankunftsstockwerk befördern. In diesem Fall müssen die Passagiere dann die Stockwerkdifferenz zwischen Rufeingabestockwerk und Abfahrtstockwerk und/oder Zielstockwerk und Ankunftsstockwerk per Treppe und/oder Fahrtreppe zurücklegen. Bei Zuweisung der günstigsten Rufzuteilung an die Aufzugskabine 17, 17' werden mindestens ein Startrufsignal und mindestens ein Zielrufsignal erzeugt und über die Signalleitung 14, 14' an den Adapter der Aufzugssteuerung 5, 5' dieser Aufzugskabine 17, 17' übermittelt.

Die Zielrufsteuerung 4 und die Aufzugssteuerung 5, 5' kommunizieren bidirektional über eine Signalleitung 14, 14'. Gemäss Fig. 1 ist die Zielrufsteuerung 4 über je eine Signalleitung 14, 14' mit einer Aufzugssteuerung 5, 5' kommunikativ verbunden. Die Kommunikationsteilnehmer an den Enden der permanent aktivierten Signalleitungen 14, 14' sind eindeutig identifizierbar.

Die Zielrufsteuerung 4 und/oder die Aufzugssteuerung 5, 5' erfassen mindestens eine Verkehrssituation im Gebäude. Dazu wird von der Zielrufsteuerung 4 und/oder Aufzugssteuerung 5, 5' mindestens eine Anzahl Rufe pro Zeiteinheit erfasst. Zusätzlich oder alternativ ist die Erfassung folgender Daten möglich: eine Anzahl Passagiere, welche von der Aufzugsanlage 1 in einer Zeiteinheit im Gebäude befördert worden sind; eine Differenz von Passagieren auf Stockwerken S1-S3 des Gebäudes, welche in einer Zeiteinheit von der Aufzugsanlage 1 von Rufeingabestocken auf Zielstockwerke befördert worden sind; eine aktuelle Anzahl Passagiere pro Stockwerk S1-S3 des gesamten Gebäudes; und so weiter. Die Anzahl Passagiere pro Stockwerk S1-S3 wird mit den bedienten Rufen und/oder aus der Zuladung der Aufzugskabine 17, 17' beim Bedienen der Rufe erfasst. Wenn also pro Zeiteinheit mehrere Passagiere an Rufeingabevorrichtungen 6 Rufe tätigen, die Passagiere daraufhin auf den Rufeingabestockwerken und/oder Abfahrtstockwerken die die Rufe bedienende Aufzugskabinen 17, 17' besteigen und mit den Aufzugskabinen 17, 17' auf Zielstockwerke und/oder Ankunftsstockwerke verfahren werden, so wird die aktuelle Verkehrssituation nachgeführt, indem die Anzahl der Passagiere auf den Rufeingabestockwerken und/oder Abfahrtstockwerken um die Anzahl der verfahrenen Passagiere abnimmt und auf den Zielstockwerken und/oder Ankunftsstockwerken entsprechend zunimmt.

Die vom Sensor 20 beim Bedienen der Rufe erfasste Zuladung der Aufzugskabine 17, 17' korrigiert oder bestätigt die Anzahl der verfahrenen Passagiere. Wenn beispielsweise zwei Passagiere auf dem gleichen Rufeingabestockwerk an einer Rufeingabevorrichtung 6 kurz nacheinander einen Zielruf auf das gleiche Zielstockwerk tätigen, so wird für diese beiden Passagiere eine Aufzugskabine 17, 17' auf das Rufeingabestockwerk verfahren. Wenn nun aber nur ein Passagier diese Aufzugskabine 17, 17' besteigt und mit ihr auf das Zielstockwerk verfahren wird, so wird diese Information aus der Zuladung der Aufzugskabine 17, 17' bestimmt (z. B. wird anstelle der zu erwartenden zweimal 75kg durchschnittliches Passagiergewicht nur ein tatsächliches Passagiergewicht von 80kg erfasst). Die Zielrufsteuerung 4 und/oder die Aufzugssteuerung 5, 5' korrigiert und/oder ergänzt somit die von der Rufeingabevorrichtung 6 kommunizierte Anzahl Rufe aufgrund der vom Sensor 20 der Aufzugskabine 17, 17' erfassten Zuladung bei der Fahrt.

Die aktuelle Verkehrssituation gibt in Echtzeit die Passagierbelegung des Gebäudes wieder. Eine aktuelle Verkehrssituation kann auch für Zonen des Gebäudes, bestimmte Stockwerke des Gebäudes und einzelne Rufe gelten. So kann eine aktuelle Verkehrssituation auch einen einzelnen Zielruf umfassen, wenn beispielsweise zu einer Randzeit sich nur wenige Passagiere im Gebäude befinden und jeder Zielruf von einer Aufzugskabine 17, 17' einzeln bedient wird.

Mindestens eine Energiemessvorrichtung 2, 2', 2'' erfasst den Energieverbrauch von mindestens einem Energieverbraucher der Aufzugsanlage 1. Die Energiemessvorrichtung 2, 2', 2'' ist lokal am Energieverbraucher platziert und erfasst als Wirkleistungsmesser dessen tatsächliche Energieaufnahme. Die Energiemessvorrichtung 2, 2', 2'' kann einen Prozessor, einen computerlesbaren Datenspeicher, einen Adapter für ein Bus-System 15, 15' und/oder einen Adapter für mindestens ein Funkfeld 16, 16' aufweisen. Aus dem Datenspeicher wird mindestens ein Kommunikations-Computerprogramm geladen und mittels des Prozessors ausgeführt. Das Kommunikations-Computerprogramm steuert die Kommunikation der Energiemessvorrichtung 2, 2', 2'' mit mindestens einer Auswertevorrichtung 3 und/oder Zielrufsteuerung 4 und/oder Aufzugssteuerung 5, 5' und/oder Rufeingabevorrichtung 6 und/oder Zentrale 7. Die Energiemessvorrichtung 2, 2', 2'' ist beispielsweise eine Messvorrichtung für elektrischen Strom, die zwischen die elektrische Stromversorgung des Gebäudes und den Energieverbraucher geschaltet ist. Die Energiemessvorrichtung 2, 2', 2'' erfasst dann den beim Betrieb des jeweiligen Energieverbrauchers fließenden elektrischen Strom und die elektrische Spannung und berücksichtigt den Phasenwinkel zwischen Strom und Spannung. Gemäss Fig. 1 und 2 ist eine erste Energiemessvorrichtung 2 am Aufzugsantrieb 8, 8' platziert und erfasst dessen Energieverbrauch; eine zweite und dritte Energiemessvorrichtung 2', 2'' sind am Türantrieb 9, 9' bzw. an der Aufzugskabinenbeleuchtung 10 platziert und erfassen jeweils deren Energieverbrauch. Als Messvorrichtung kommt jeder bekannte Leistungsmesser oder -aufnehmer in Betracht, für einen dreiphasigen Aufzugsantrieb 8, 8' z. B. ein Dreiphasen-Leistungsmesser, für einen Gleichstromtürantrieb z. B. ein Einphasen-Leistungsaufnehmer und so weiter. Derartige Geräte, deren Funktionalität und Anschlusserfordernisse sind an sich bekannt.

Mindestens eine Auswertevorrichtung 3 wertet mindestens einen erfassten Energieverbrauch und mindestens eine erfasste Verkehrssituation aus. Die Auswertevorrichtung 3 kann eine eigenständige Vorrichtung oder Bestandteil einer Energiemessvorrichtung 2, 2', 2'' und/oder einer Zielrufsteuerung 4 und/oder einer Aufzugssteuerung 5, 5' und/oder einer Rufeingabevorrichtung 6 und/oder einer Zentrale 7 sein. Die Auswertevorrichtung 3 kann ein elektronischer Einschub, beispielsweise in Form einer Leiterplatte sein, welche gemäss Fig. 2 Bestandteil der Zielrufsteuerung 4 oder gemäss Fig. 2 Bestandteil einer der Energiemessvorrichtungen 2, 2', 2'' ist. Zur kommunikativen Verbindbarkeit umfasst die Auswertevorrichtung 3 mindestens einen Adapter für ein Bus-System 15, 15' und/oder mindestens einen Adapter für ein Funkfeld 16, 16'. Die Auswertevorrichtung 3 umfasst weiter eine Verarbeitungseinheit nach Art eines Prozessors und mindestens einen computerlesbaren Datenspeicher. Aus dem Datenspeicher wird mindestens ein Computerprogramm geladen und durch die Verarbeitungseinheit ausgeführt. Die Auswertevorrichtung 3 verknüpft den erfassten Energieverbrauch mit der erfassten Verkehrssituation. Dazu kommuniziert die Energiemessvorrichtung 2, 2', 2'' den erfassten Energieverbrauch an die Auswertevorrichtung 3 und die Zielrufsteuerung 4 und/oder die Aufzugssteuerung 5, 5' kommuniziert die erfasste Verkehrssituation an die Auswertevorrichtung 3. Das Computerprogramm der Auswertevorrichtung 3 ermittelt daraus mindestens einen der folgenden Energieverbrauchswerte 21, z. B.:
- Energieverbrauch der Aufzugsanlage 1 pro Verkehrsituation,
- Energieverbrauch pro Aufzugskabine 17, 17' und Verkehrssituation,
- Energieverbrauch pro Passagier,
- Energieverbrauch pro Passagier und Zeiteinheit,
- Energieverbrauch pro Ruf,
- Energieverbrauch pro Fahrt,
- Energieverbrauch pro Fahrt und Zeiteinheit,
- Energieverbrauch pro Fahrt und Verkehrssituation und
- Energieverbrauch pro Zone.

Des Weiteren kommt auch die Ermittlung folgender oder weiterer Energieverbrauchswerte in Betracht, nämlich z. B.:
- Energieverbrauch pro Energieverbraucher,
- Energieverbrauch pro Energieverbraucher und Zeiteinheit,
- Energieverbrauch der Aufzugsanlage 1,
- Energieverbrauch der Aufzugsanlage 1 pro Zeiteinheit,
- Energieverbrauch pro Aufzugskabine 17, 17' und
- Energieverbrauch pro Aufzugskabine 17, 17' und Zeiteinheit.

Die Zeiteinheit lässt sich beliebig wählen, typische Zeiteinheiten sind Minuten, Viertelstunden, Stunden, Tage, Wochen, Monate, Jahre.

Der jeweilige Energieverbrauchswert 21 und/oder die zugrunde liegenden Daten können in einem computerlesbaren Datenspeicher der Aufzugsanlage 1 gespeichert werden. So ist es möglich, einen Energieverbrauch und eine Verkehrssituation einmalig vorgängig zu erfassen und abzuspeichern. In diesem Fall muss z. B. der Energieverbrauch eines Energieverbrauchers nicht noch einmal erfasst werden, es reicht dann aus, den abgespeicherten Energieverbrauch zu identifizieren, z. B. durch Auswahl des oder jedes jeweiligen Verbrauchers, und aus dem computerlesbaren Datenspeicher zu laden. Genauso lässt sich nur der jeweils ermittelte Energieverbrauchswert 21 abspeichern. In diesem Fall reicht es dann aus, für einen identifizierten Energieverbrauch und eine identifizierte Verkehrssituation einen Energieverbrauchswert 21 aus dem computerlesbaren Datenspeicher zu laden.

Auch ist es möglich, für standardisierte Aufzugsanlagen 1 und/oder standardisierte Aufzugsanlagenkomponenten einen Energieverbrauch vorgängig zu erfassen und abzuspeichern. Aufgrund der Standardisierung ist der Energieverbrauch dieser Energieverbraucher identisch. In diesem Fall reicht es aus, nur die Verkehrssituation zu erfassen, und für die erfasste Verkehrssituation einen abgespeicherten Energieverbrauchswert 21 zu identifizieren und aus dem computerlesbaren Datenspeicher zu laden.

Des Weiteren ist es möglich, für eine vorbekannte Verkehrssituation nur den Energieverbrauch des jeweiligen Energieverbrauchers aktuell zu erfassen. Beispielsweise ist die Verkehrssituation im Gebäude zu Stoßzeiten wie morgens und abends immer knapp unterhalb der Kapazitätsgrenze der Aufzugsanlage 1. Für diese, sich in einem Gebäude immer weitgehend gleich wiederholende Verkehrssituation braucht man nur den Energieverbrauch der Energieverbraucher zu erfassen und kann die identifizierte Verkehrssituation für die Ermittlung des Energieverbrauchswerts 21 aus dem computerlesbaren Datenspeicher laden.

Es ist aber auch möglich, den Energieverbrauch des Energieverbrauchers und/oder die Verkehrssituation durch die Auswertevorrichtung 3 zu simulieren. Dies ist gerade in der Planungsphase einer Aufzugsanlage 1 von Bedeutung, wo die Aufzugsanlage 1 noch nicht installiert ist, wo aber für deren energiesparende Auslegung bereits Aussagen über den zukünftigen Energieverbrauch der jeweils umfassten Energieverbraucher notwendig sind. Die Auswertevorrichtung 3 kann dann den Energieverbrauch eines Energieverbrauchers ab initio ermitteln, beispielsweise indem sie als Energieverbrauch eine Leistungsaufnahme eines Aufzugsantriebs 8, 8' und/oder eines Türantriebs 9, 9' und/oder einer Aufzugskabinenbeleuchtung 10, 10' sowie die Verkehrssituation simuliert und daraus einen Energieverbrauchswert 21 ermittelt. Die Auswertevorrichtung 3 kann in diesem Fall bei einem Verkäufer einer Aufzugsanlage 1 platziert sein, welcher aufgrund von Kundenwünschen eine energiesparsame Aufzugsanlage 1 konzipiert. Die jeweiligen Energieverbraucher oder einzelne Energieverbraucher werden dann so ausgewählt, dass sie beim Betrieb der Aufzugsanlage 1 möglichst nahe bei ihrem jeweiligen Nennpunkt betrieben werden. Die Aufzugsanlage 1 wird dann mit diesem vorgängig bei der Planung der Aufzugsanlage 1 ermittelten Energieverbrauchswert 21 installiert. Es ist zudem möglich, bereits bei der Planung der Aufzugsanlage 1 ein Energieverbrauchs-Garantiezertifikat (Zertifikat) der Aufzugsanlage 1 auszugeben, wonach der Energieverbrauchswert 21 der Aufzugsanlage 1 nach abgeschlossener Installation einen garantierten Energieverbrauchswert 21 nicht überschreitet. Beispielsweise gibt das Zertifikat der Aufzugsanlage 1 an, dass der Energieverbrauchswert 21 einem Energieverbrauchs-Label "A", "B", "C" usw. gemäss VDI4707 entspricht. Auch kann das Zertifikat angeben, dass der Energieverbrauchswert 21 eine bestimmte CO₂-Emission nicht überschreitet. Die Genauigkeit der Einhaltung des Energieverbrauchswerts 21 kann +/-10%, vorteilhaft +/-5% betragen.

Mindestens eine Zentrale 7 ist entweder, wie in Fig. 1 dargestellt, über mindestens ein Bus-System 15' oder, wie in Fig. 2 dargestellt, über mindestens ein Funkfeld 16' mit der Aufzugsanlage 1 kommunikativ verbunden. Die Zentrale 7 kann außerhalb des Gebäudes oder im Gebäude platziert sein. Fig. 1 zeigt eine vom Gebäude entfernte Anordnung, bei der die Zentrale 7 über ein Bus-System 15' mit einer Zielrufsteuerung 4 und einer Aufzugssteuerung 5, 5' kommunikativ verbunden ist. Fig. 2 zeigt die Zentrale 7 in einem der Stockwerke S3 des Gebäudes, wobei die Zentrale 7 über ein Funkfeld 16' mit einer Aufzugssteuerung 5 kommunikativ verbunden ist. Die Zentrale 7 kann von einem Gebäudeverwalter bedient werden. Die Zentrale 7 kann eine Recheneinheit wie ein Computer, ein Mobiltelefon usw. sein. In mindestens einem Gehäuse der Zentrale 7 sind mindestens ein Prozessor, mindestens ein computerlesbarer Datenspeicher, mindestens ein Adapter für ein Bus-System 15, 15' und/oder mindestens ein Adapter für ein Funkfeld 16, 16', mindestens ein Ausgabemittel, z. B. ein Bildschirm 13', und eine elektrische Stromversorgung angeordnet. In den Prozessor der Zentrale 7 können mehrere Computerprogramme geladen werden, die unabhängig voneinander und/oder zusammen miteinander arbeiten. Mindestens ein Computerprogramm steuert den Adapter und/oder das Ausgabemittel an.

Die Energiemessvorrichtung 2, 2', 2'', die Auswertevorrichtung 3, die Zielrufsteuerung 4, die Aufzugssteuerung 5, 5', die Rufeingabevorrichtung 6 und die Zentrale 7 können über mindestens ein Bus-System 15, 15' oder über ein Funkfeld 16, 16' bidirektional miteinander kommunizieren. Als Bus-System 15, 15' kommt jedes bekannte Bus-System in Betracht, wie etwa Universal Serial Bus (USB), Local Operating Network (LON), Modbus, Ethernet und so weiter. Für die Kommunikation im Funkfeld 16, 16' lassen sich bekannte lokale Funknetzwerke wie Bluetooth (IEEE 802.15.1), ZigBee (IEEE 802.15.4) oder Wi-Fi (IEEE 802.11) oder bekannte Mobilfunknetze wie Global System for Mobile Communications (GSM), General Packet Radio Service (GPRS), Universal Mobile Telecommunications Service (UMTS), usw. verwenden.

Das Bus-System 15, 15' ist in Fig. 1 und 2 durch gepunktete Linien dargestellt. Gemäss Fig. 1 sind pro Stockwerk S1-S3 jeweils zwei Rufeingabevorrichtungen 6 über das Bus-System 15 mit der Zielrufsteuerung 4 kommunikativ verbunden. Ferner ist gemäss Fig. 1 die Zielrufsteuerung 4 über ein Bus-System 15' mit der Zentrale 7 kommunikativ verbunden. Gemäss Fig. 2 ist pro Stockwerk S1-S3 jeweils eine Rufeingabevorrichtung 6 über ein Bus-System 15 mit einer Aufzugssteuerung 5 kommunikativ verbunden. Ferner sind gemäss Fig. 2 mehrere Energiemessvorrichtungen 2, 2', 2'' und die Auswertevorrichtung 3 über das Bus-System 15 mit der Aufzugssteuerung 5 kommunikativ verbunden. Das Funkfeld 16, 16' ist in Fig. 1 und 2 durch gekrümmte Dreifachkreissegmente dargestellt. Gemäss Fig. 1 sind mehrere Energiemessvorrichtungen 2, 2', 2'' und die Zielrufsteuerung 4 sowie die Auswertevorrichtung 3 über ein Funkfeld 16 kommunikativ miteinander verbunden. Ferner sind gemäss Fig. 2 die Aufzugssteuerung 5 und die Zentrale 7 über ein Funkfeld 16' kommunikativ miteinander verbunden. Neben den erwähnten Vernetzungsarten sind andere leitungslose oder leitungsgebundene Vernetzungsarten ebenso möglich wie andere als die dargestellten Vernetzungstopologien oder Kombinationen daraus.

Fig. 5 zeigt ein Ausführungsbeispiel eines auf dem Ausgabemittel der Zentrale 7 ausgegebenen Energieverbrauchswerts 21 der Aufzugsanlage 1. Beispielsweise wird gemäss Fig. 5 auf dem Bildschirm 13' der Zentrale 7 ein Diagramm mit zwei verschiedenen Energieverbrauchswerten 21 der Aufzugsanlage 1 pro Zeiteinheit ausgegeben, und ein Gebäudeverwalter kann über mindestens eine Taste 26 zwischen zwei mit den Energieverbrauchswerten 21 verknüpften Betriebsmodi der Aufzugsanlage 1 wählen, welche jeweils zu einem unterschiedlichen Energieverbrauch führen. Durch Auswahl eines Energieverbrauchswerts 21 der Aufzugsanlage 1 werden die Aufzugsanlage 1 von der Zielrufsteuerung 4 und/oder Aufzugssteuerung 5, 5' mit dem ausgewählten Energieverbrauchswert 21 betrieben. Der Gebäudeverwalter kann so zwischen verschiedenen Energieverbrauchs-Labeln auswählen. Beispielsweise entscheidet der Gebäudeverwalter, die Aufzugsanlage 1 energiesparsam mit einem Energieverbrauchs-Label "A" zu betreiben oder er entscheidet, die Aufzugsanlage 1 weniger energiesparsam mit einem Energieverbrauchs-Label "B" oder "C" zu betreiben. Im Betrieb der Aufzugsanlage 1 mit einem Energieverbrauchs-Label "A" sind Wartezeiten und/oder Zielzeiten größer, aber auch ein Energieverbrauch und/oder eine CO₂-Emission kleiner als bei einem Betrieb mit Energieverbrauchs-Labeln "B" oder "C". Beispielsweise fahren die Aufzugskabinen 17, 17' nur Stockwerke mit geraden Nummern an und/oder es fahren nicht alle Aufzugskabinen 17, 17', da eine oder mehrere Aufzugskabinen 17, 17' zum Zweck des Energiesparens gezielt abgeschaltet werden.

Der Energieverbrauchswert 21 kann auch für Rechnungszwecke verwendet werden. Beispielsweise wird einem Gebäudeverwalter eine Rechnung für den Betrieb der Aufzugsanlage 1 über eine bestimmte Zeiteinheit zugestellt, welche zumindest teilweise auf Basis des Energieverbrauchswerts 21 der Aufzugsanlage 1 erstellt ist.

Fig. 6 zeigt ein Ausführungsbeispiel eines auf dem Ausgabemittel einer Rufeingabevorrichtung 6 ausgegebenen Energieverbrauchswerts 21 der Aufzugsanlage 1. Beispielsweise werden gemäss Fig. 6 auf einem Tastschirm 13 einer Rufeingabevorrichtung 6 zu einem eingegebenen Ruf drei verschiedene Energieverbrauchswerte der Aufzugsanlage 1 für eine Fahrt zur Bedienung des Rufs ausgegeben.

Der Grund für die verschiedenen Energieverbrauchswerte können einmal variierende Verkehrssituationen sein, die der jeweiligen Energieverbrauchswertermittlung zugrunde gelegt wurden, z. B. direkt Fahrt, direkte Fahrt mit Wartezeit, Fahrt mit erlaubten Zwischenstopps und so weiter. Ein weiterer oder zusätzlicher Grund kann ein unterschiedlicher Energieverbrauch sein. Optimal und energieoptimal wird z. B. ein Elektromotor als Aufzugsantrieb 8, 8' im Bereich seines so genannten Nennpunkts betrieben. Allerdings ist ohne Weiteres ein Betrieb außerhalb des Nennpunkts möglich, z. B., zumindest zeitlich begrenzt, im Überlastbereich. Wenn ein Betrieb im Bereich des Nennpunkts eine Fahrt mit Normalgeschwindigkeit bedeutet, ist bei einem Betrieb im zulässigen Überlastbereich eine Erhöhung der Geschwindigkeit der Fahrt möglich. Beide Konstellationen führen zu einem jeweils unterschiedlichen Energieverbrauch des Aufzugsantriebs 8, 8' und entsprechend zu unterschiedlichen, auswählbaren Energieverbrauchswerten.

Der Passagier kann über mindestens ein Feld 23'' des Tastschirms 13 zwischen den z. B. drei mit den Energieverbrauchswerten 21 verknüpften Fahrten wählen, wobei jeweils ein unterschiedlicher Energieverbrauch resultiert. Durch Auswahl einer der Energieverbrauchswerte 21 wird der Ruf mit der mit dem ausgewählten Energieverbrauchswert 21 verknüpften Fahrt von der Zielrufsteuerung 4 und/oder Aufzugssteuerung 5, 5' bedient. Der Passagier kann so zwischen verschiedenen Energieverbrauchs-Labeln auswählen. Beispielsweise entscheidet sich der Passagier für eine energiesparsame Fahrt mit einem Energieverbrauchs-Label "A" oder er entscheidet sich für eine weniger energiesparsame Fahrt mit einem Energieverbrauchs-Label "B" oder "C".

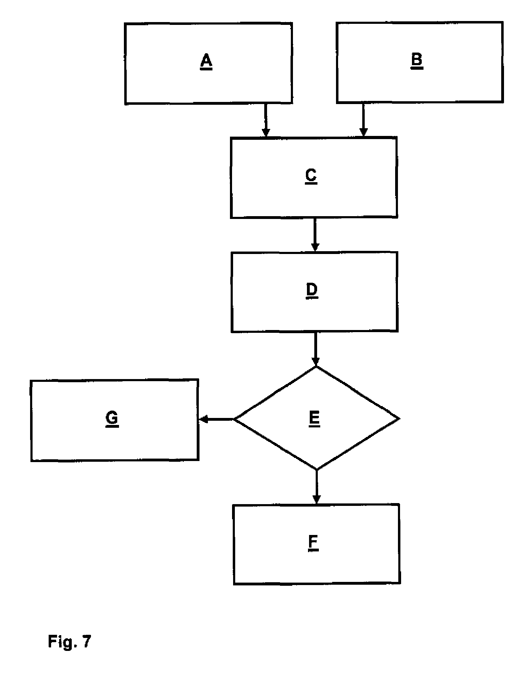

Fig. 7 zeigt ein Flussdiagramm mit Verfahrensschritten des Verfahrens zum Betrieb der Aufzugsanlage 1, insbesondere zum energiesparenden Betrieb. In einem Verfahrensschritt A erfasst mindestens eine Energiemessvorrichtung 2, 2', 2'' den Energieverbrauch von mindestens einem Energieverbraucher. In einem Verfahrensschritt B erfassen mindestens eine Zielrufsteuerung 4 und/oder Aufzugssteuerung 5, 5' mindestens eine Verkehrssituation der Aufzugsanlage 1. In einem Verfahrensschritt C ermittelt mindestens eine Auswertevorrichtung 3 aus einem erfassten Energieverbrauch und einer erfassten Verkehrssituation mindestens einen Energieverbrauchswert 21. In einem Verfahrensschritt D wird der ermittelte Energieverbrauchswert 21 auf mindestens einem Ausgabemittel ausgegeben. In einem Verfahrensschritt E wird unter Verwendung des ermittelten Energieverbrauchswerts 21 mindestens ein energiesparender Betrieb der Aufzugsanlage 1 an-und/oder ausgewählt. In einem Verfahrensschritt F wird die Aufzugsanlage 1 in einem ersten ausgewählten energiesparenden Betrieb betrieben. Alternativ wird die Aufzugsanlage 1 in einem Verfahrensschritt F unter Verwendung des ermittelten Energieverbrauchswerts 21 in einem weiteren ausgewählten energiesparenden Betrieb betrieben.

## Patentansprüche

1. Verfahren zum Betrieb einer Aufzugsanlage (1),
wobei ein Energieverbrauch von mindestens einem Energieverbraucher der Aufzugsanlage (1) erfasst wird,
wobei mindestens eine Verkehrssituation der Aufzugsanlage (1) erfasst wird,
**dadurch gekennzeichnet, dass**
mit dem erfassten Energieverbrauch und der erfassten Verkehrssituation mindestens ein Energieverbrauchswert (21) ermittelt wird,
dass der ermittelte Energieverbrauchswert (21) auf mindestens einem Ausgabemittel ausgegeben wird und
dass zur Ermittlung der Verkehrssituation von mindestens einer Zielrufsteuerung (4) und/oder Aufzugssteuerung (5, 5') entweder
- mindestens eine Anzahl Rufe pro Zeiteinheit und/oder
- mindestens eine Anzahl Passagiere, welche von der Aufzugsanlage (1) in einer Zeiteinheit im Gebäude befördert worden sind, und/oder
- mindestens eine Differenz von Passagieren auf Stockwerken (S1-S3) des Gebäudes, welche in einer Zeiteinheit von der Aufzugsanlage (1) von Rufeingabestockwerken auf Zielstockwerke befördert worden sind,
erfasst wird und
von der Zielrufsteuerung (4) und/oder Aufzugssteuerung (5, 5') aus der Anzahl Rufe pro Zeiteinheit bzw. aus der Anzahl beförderter Passagiere bzw. aus der Differenz von Passagieren auf Stockwerken (S1-S3) die Verkehrssituation der Aufzugsanlage (1) ermittelt wird.

2. Verfahren nach Anspruch 1, wobei zur Ermittlung der mindestens einen Verkehrssituation von mindestens einem Sensor (20) mindestens eine Zuladung von mindestens einer Aufzugskabine (17, 17') erfasst und als Sensordaten an mindestens eine Auswertevorrichtung (3) und/oder Zielrufsteuerung (4) und/oder Aufzugssteuerung (5, 5') kommuniziert werden.

3. Verfahren nach einem der vorangehenden Ansprüche,
wobei der ermittelte Energieverbrauch und/oder die ermittelte Verkehrssituation in mindestens einem computerlesbaren Datenspeicher abgespeichert werden,
wobei ein abgespeicherter ermittelter Energieverbrauch und/oder eine abgespeicherte ermittelte Verkehrssituation identifiziert und aus dem computerlesbaren Datenspeicher geladen werden und wobei der geladene und/oder ermittelte Energieverbrauch und die geladene und/oder ermittelte Verkehrssituation von mindestens einer Auswertevorrichtung (3) ausgewertet werden und der Energieverbrauchswert (21) ermittelt wird.

4. Verfahren nach einem der vorangehenden Ansprüche,
wobei von mindestens einer Auswertevorrichtung (3) der Energieverbrauch des mindestens einen Energieverbrauchers und/oder die mindestens eine Verkehrssituation der Aufzugsanlage (1) simuliert werden und
wobei mit dem simulierten Energieverbrauch und der simulierten Verkehrssituation mindestens ein Energieverbrauchswert (21) ermittelt wird.

5. Verfahren nach einem der vorangehenden Ansprüche,
wobei von mindestens einem Sensor (20) Sensordaten erfasst werden, welche mindestens eine Zuladung von mindestens einer Aufzugskabine (17, 17') kodieren und
wobei die ermittelte Verkehrssituation durch die als Sensordaten erfasste Zuladung der Aufzugskabine (17, 17') korrigiert oder bestätigt wird.

6. Verfahren nach einem der vorangehenden Ansprüche,
wobei auf Basis mehrerer ermittelter, insbesondere auf einem Ausgabemittel einer Zentrale (7) und/oder einem Ausgabemittel einer Rufeingabevorrichtung (6) ausgegebener, Energieverbrauchswerte (21) mindestens ein Energieverbrauchswert (21) zum energiesparenden Betrieb der Aufzugsanlage (1) ausgewählt und die Aufzugsanlage (1) mit dem ausgewählten Energieverbrauchswert (21) betrieben wird.

7. Verfahren nach Anspruch 6,
wobei der ausgewählte Energieverbrauchswert (21) an mindestens eine Zielrufsteuerung (4) und/oder Aufzugssteuerung (5, 5') kommuniziert wird und
wobei mindestens ein Bestandteil der Aufzugsanlage (1) von der Zielrufsteuerung (4) und/oder Aufzugssteuerung (5, 5') in mindestens einem mit dem ausgewählten Energieverbrauchswert (21) verknüpften Betriebsmodus betrieben wird.

8. Verfahren nach Anspruch 6,
wobei an mindestens einer Rufeingabevorrichtung (6) mindestens ein Ruf eingegeben und/oder mindestens ein Identifikationscode empfangen wird,
wobei zum Bedienen des Rufs und/oder Identifikationscodes von mindestens einer Zielrufsteuerung (4) und/oder Aufzugssteuerung (5, 5') mindestens eine Fahrt von mindestens einer Aufzugskabine (17, 17') ermittelt wird,
wobei für die Fahrt von mindestens einer Auswertevorrichtung (3) mindestens ein Energieverbrauchswert (21) ermittelt wird,
wobei die Fahrt mit dem mindestens einen Energieverbrauchswert (21) verknüpft wird,
wobei die Fahrt und der Energieverbrauchswert (21) auf der Rufeingabevorrichtung (6) ausgegeben werden,
wobei für eine Fahrt ein Energieverbrauchswert (21) ausgewählt wird und
wobei der Ruf oder Identifikationscode von der Zielrufsteuerung (4) und/oder Aufzugssteuerung (5, 5') mit der mit dem ausgewählten Energieverbrauchswert (21) verknüpften Fahrt bedient wird.

9. Verfahren nach Anspruch 8,
wobei der eingegebene Ruf und/oder empfangene Identifikationscode von der Rufeingabevorrichtung (6) an mindestens eine Zielrufsteuerung (4) und/oder Aufzugssteuerung (5, 5') kommuniziert wird,
wobei die ermittelte Fahrt an mindestens einer Auswertevorrichtung (3) kommuniziert wird,
wobei die Fahrt und der Energieverbrauchswert (21) an die Rufeingabevorrichtung (6) kommuniziert werden und
wobei ein für eine Fahrt ausgewählter Energieverbrauchswert (21) von der Rufeingabevorrichtung (6) an die Zielrufsteuerung (4) und/oder Aufzugssteuerung (5, 5') kommuniziert wird.

10. Verfahren nach einem der vorangehenden Ansprüche,
wobei der Energieverbrauchswert (21) der Aufzugsanlage (1) vor Installation der Aufzugsanlage (1) ermittelt wird und die Aufzugsanlage (1) mit dem ermittelten Energieverbrauchswert (21) installiert wird.

11. Verfahren nach Anspruch 10,
wobei zu dem für die Aufzugsanlage (1) vor deren Installation ermittelten Energieverbrauchswert (21) mindestens ein Energieverbrauchs-Garantiezertifikat ausgegeben wird, wonach der tatsächliche Energieverbrauchswert (21) der Aufzugsanlage (1) nach abgeschlossener Installation den ermittelten Energieverbrauchswert (21) garantiert nicht überschreiten wird.

12. Verfahren nach Anspruch 11,
wobei ein tatsächlicher Energieverbrauchswert (21) der Aufzugsanlage (1) durch Erfassen von mindestens einem Energieverbrauch der Aufzugsanlage (1) und mindestens einer Verkehrssituation der Aufzugsanlage (1) und Ermittlung von mindestens einem tatsächlichen Energieverbrauchswert (21) mit dem ermittelten Energieverbrauchswert (21) gemäß dem Energieverbrauchs-Garantiezertifikat für dessen Überprüfung und/oder Bestätigung verglichen wird.

13. Aufzugsanlage zur Durchführung des Verfahrens nach einem der vorangehenden Ansprüche,
mit mindestens einer Auswertevorrichtung (3), insbesondere einer von einer Energiemessvorrichtung (2, 2', 2'') und/oder Zielrufsteuerung (4) und/oder Aufzugssteuerung (5, 5') und/oder Rufeingabevorrichtung (6) und/oder Zentrale (7) umfassten Auswertevorrichtung (3),
wobei die mindestens eine Auswertevorrichtung (3) den erfassten Energieverbrauch eines Energieverbrauchers und die erfasste Verkehrssituation der Aufzugsanlage (1) auswertet und den Energieverbrauchswert (21) ermittelt,
wobei die Zielrufsteuerung (4) und/oder die Aufzugssteuerung (5, 5') entweder
- mindestens eine Anzahl Rufe pro Zeiteinheit und/oder
- mindestens eine Anzahl Passagiere, welche von der Aufzugsanlage (1) in einer Zeiteinheit im Gebäude befördert worden sind, und/oder
- mindestens eine Differenz von Passagieren auf Stockwerken (S1-S3) des Gebäudes, welche in einer Zeiteinheit von der Aufzugsanlage (1) von Rufeingabestockwerken auf Zielstockwerke befördert worden sind,
erfassen und
wobei die Zielrufsteuerung (4) und/oder die Aufzugssteuerung (5, 5') aus der Anzahl Rufe pro Zeiteinheit bzw. aus der Anzahl beförderter Passagiere bzw. aus der Differenz von Passagieren auf Stockwerken (S1-S3) die Verkehrssituation der Aufzugsanlage (1) ermitteln.

14. Aufzugsanlage nach Anspruch 13,
wobei mindestens eine Zentrale (7) und/oder mindestens eine Rufeingabevorrichtung (6) das zur Ausgabe des ermittelten Energieverbrauchswerts (21) vorgesehene Ausgabemittel umfasst.

## Claims

1. Method of operating a lift installation (1), wherein an energy consumption of at least one energy consumer of the lift installation (1) is detected and wherein at least one traffic situation of the lift installation (1) is detected,
**characterised in that**
at least one energy consumption value (21) is determined by the detected energy consumption and the detected traffic situation,
the determined energy consumption value (21) is output at at least one output means and for determination of the traffic situation by at least one destination call control (4) and/or lift control (5, 5')
- at least one number of calls per unit of time and/or
- at least one number of passengers who have been transported by the lift installation (1) in a unit of time in the building and/or
- at least one difference of passengers on storeys (S1-S3) of the building who have been transported in a unit of time by the lift installation (1) from call input storeys to destination storeys
is or are detected and
the traffic situation of the lift installation (1) is determined by the destination call control (4) and/or lift control (5, 5') from the number of calls per unit of time or from the number of transported passengers or from the difference of passengers on storeys (S1-S3).

2. Method according to claim 1, wherein for determination of the at least one traffic situation at least one loading of at least one lift cage (17, 17') is detected by at least one sensor (20) and is communicated as sensor data to at least one evaluating device (3) and/or destination call control (4) and/or lift control (5, 5').

3. Method according to one of the preceding claims,
wherein the determined energy consumption and/or the determined traffic situation is or are stored in at least one computer-readable data memory,
wherein a stored determined energy consumption and/or a stored determined traffic situation is or are identified and loaded from the computer-readable data memory and wherein the loaded and/or determined energy consumption and the loaded and/or determined traffic situation is or are evaluated by at least one evaluating device (3) and the energy consumption value (21) is determined.

4. Method according to any one of the preceding claims,
wherein the energy consumption of the at least one energy consumer and/or the at least one traffic situation of the lift installation (1) is or are simulated by at least one evaluating device (3) and
wherein at least one energy consumption value (21) is determined with the simulated energy consumption and the simulated traffic situation.

5. Method according to any one of the preceding claims,
wherein sensor data which code at least one loading of at least one lift cage (17, 17') are detected by at least one sensor (20) and
wherein the determined traffic situation is corrected or confirmed by the loading, which was detected as sensor data, of the lift cage (17, 17').

6. Method according to any one of the preceding claims, wherein at least one energy consumption value (21) for energy-saving operation of the lift installation (1) is selected on the basis of a plurality of determined energy consumption values (21), which are, in particular, output on output means of a central station (7) and/or output means of a call input device (6), and the lift installation (1) is operated with the selected energy consumption value (21).

7. Method according to claim 6,
wherein the selected energy consumption value (21) is communicated to at least one destination call control (4) and/or lift control (5, 5') and
wherein at least one component of the lift installation (1) is operated by the destination call control (4) and/or lift control (5, 5') in at least one operating mode linked with the selected energy consumption value (21).

8. Method according to claim 6,
wherein at least one call is input and/or at least one identification code received at at least one call input device (6),
wherein for servicing of the call and/or identification code at least one journey of at least one lift cage (17, 17') is determined by at least one destination call control (4) and/or lift control (5, 5'),
wherein at least one energy consumption value (21) is determined for the journey by at least one evaluating device (3),
wherein the journey is linked with the at least one energy consumption value (21),
wherein the journey and the energy consumption value (21) are output on the call input device (6),
wherein an energy consumption value (21) is selected for a journey and
wherein the call or identification code is serviced by the destination call control (4) and/or lift control (5, 5') by the journey linked with the selected energy consumption value (21).

9. Method according to claim 8,
wherein the input call and/or received identification code is or are communicated by the call input device (6) to at least one destination call control (4) and/or lift control (5, 5'), wherein the determined journey is communicated to at least one evaluating device (3), wherein the journey and the energy consumption value (21) are communicated to the call input device (6) and
wherein an energy consumption value (21), which is selected for a journey, is communicated by the call input device (6) to the destination call control (4) and/or lift control (5, 5').

10. Method according to any one of the preceding claims, wherein the energy consumption value (21) of the lift installation (1) is determined before installing of the lift installation (1) and the lift installation (1) is installed with the determined energy consumption value (21).

11. Method according to claim 10, wherein at least one energy consumption guarantee certificate is issued with respect to the energy consumption value (21) determined for the lift installation (1) prior to it being installed, according to which the actual energy consumption value (21) of the lift installation (1) after installing has been concluded is guaranteed not to exceed the determined energy consumption value (21).

12. Method according to claim 11, wherein an actual energy consumption value (21) of the lift installation (1) is, for detection of at least one energy consumption of the lift installation (1) and at least one traffic situation of the lift installation (1) and determination of at least one actual energy consumption value (21), compared with the determined energy consumption value (21) in accordance with the energy consumption guarantee certificate for checking and/or confirmation thereof.

13. Lift installation for carrying out the method according to any one of the preceding claims,
with at least one evaluating device (3), particularly an evaluating device (3) comprising an energy measuring device (2, 2', 2") and/or destination call control (4) and/or lift control (5, 5') and/or call input device (6) and/or central station (7),
wherein the at least one evaluating device (3) evaluates the detected energy consumption of an energy consumer and the detected traffic situation of the lift installation (1) and determines the energy consumption value (21),
wherein the destination call control (4) and/or the lift control (5, 5') detects or detect
- at least one number of calls per unit of time and/or
- at least one number of passengers who have been transported by the lift installation (1) in a unit of time in the building and/or
- at least one difference of passengers on storeys (S1-S3) of the building who have been transported in a unit of time by the lift installation (1) from call input storeys to destination storeys, and
wherein the destination call control (4) and/or the lift control (5, 5') determines or determine the traffic situation of the lift installation (1) from the number of calls per unit of time or from the number of transported passengers or from the difference of passengers on storeys (S1-S3).

14. Lift installation according to claim 13, wherein at least one central station (7) and/or at least one call input device (6) comprises or comprise the output means provided for output of the determined energy consumption value (21).

## Revendications

1. Procédé de fonctionnement d'une installation d'ascenseur (1),
étant précisé qu'une consommation d'énergie d'au moins un consommateur d'énergie de l'installation d'ascenseur (1) est détectée,
qu'au moins une situation de trafic de l'installation d'ascenseur (1) est détectée,
**caractérisé en ce qu'**avec la consommation d'énergie et la situation de trafic détectées, au moins une valeur de consommation d'énergie (21) est déterminée,
**en ce que** la valeur de consommation d'énergie (21) est sortie sur au moins un moyen de sortie, et
**en ce que** pour déterminer la situation de trafic,
au moins une commande d'appels de destination (4) et/ou une commande d'ascenseur (5, 5') détectent
- au moins un nombre d'appels par unité de temps et/ou
- au moins un nombre de passagers qui ont été transportés par l'installation d'ascenseur (1) dans le bâtiment en une unité de temps, et/ou
- au moins une différence de passagers aux étages (S1-S3) du bâtiment qui ont été transportés par l'installation d'ascenseur, en une unité de temps, d'étages d'entrée d'appels jusqu'à des étages de destination, et
la commande d'appels de destination (4) et/ou la commande d'ascenseur (5, 5') déterminent, à partir du nombre d'appels par unité de temps ou du nombre de passagers transportés ou de la différence de passagers aux étages (S1-S3), la situation de trafic de l'installation d'ascenseur (1).

2. Procédé selon la revendication 1, étant précisé que pour déterminer la ou les situations de trafic, au moins une charge utile d'au moins une cabine d'ascenseur (17, 17') est déterminée par au moins un capteur (20) et est communiquée sous forme de données de capteur à au moins un dispositif d'analyse (3) et/ou une commande d'appels de destination (4) et/ou une commande d'ascenseur (5, 5').

3. Procédé selon l'une des revendications précédentes, étant précisé
que la consommation d'énergie et/ou la situation de trafic déterminée sont stockées dans au moins une mémoire de données lisible par ordinateur,
qu'une consommation d'énergie déterminée qui a été stockée et/ou une situation de trafic déterminée qui a été stockée sont identifiées et extraites de la mémoire de données lisible par ordinateur, et
que la consommation d'énergie extraite et/ou déterminée et la situation de trafic extraite et/ou déterminée sont analysées par au moins un dispositif d'analyse (3), et la valeur de consommation d'énergie (21) est déterminée.

4. Procédé selon l'une des revendications précédentes, étant précisé qu'au moins un dispositif d'analyse (3) simule la consommation d'énergie du ou des consommateurs d'énergie et/ou la ou les situations de trafic de l'installation d'ascenseur (1), et
qu'avec la consommation d'énergie et la situation de trafic simulées, au moins une valeur de consommation d'énergie (21) est déterminée.

5. Procédé selon l'une des revendications précédentes, étant précisé qu'au moins un capteur (20) détecte des données de capteur qui codent au moins une charge utile d'au moins une cabine d'ascenseur (17, 17'), et
que la situation de trafic déterminée est corrigée ou confirmée par la charge utile de la cabine d'ascenseur (17, 17') détectée sous la forme de données de capteur.

6. Procédé selon l'une des revendications précédentes, étant précisé que sur la base de plusieurs valeurs de consommation d'énergie (21) déterminées, en particulier sorties sur un moyen de sortie d'un central (7) et/ou sur un moyen de sortie d'un dispositif d'entrée d'appels (6), au moins une valeur de consommation d'énergie (21) est sélectionnée pour le fonctionnement économe en énergie de l'installation d'ascenseur (1), et celle-ci fonctionne avec la valeur de consommation d'énergie.

7. Procédé selon la revendication 6, étant précisé que la valeur de consommation d'énergie (21) sélectionnée est communiquée à au moins une commande d'appels de destination (4) et/ou une commande d'ascenseur (5, 5'), et
que la commande d'appels de destination (4) et/ou la commande d'ascenseur (5, 5') font fonctionner au moins un élément de l'installation d'ascenseur (1) dans au moins un mode de fonctionnement associé à la valeur de consommation d'énergie (21) sélectionnée.

8. Procédé selon la revendication 6, étant précisé
qu'au niveau d'au moins un dispositif d'entrée d'appels (6), au moins un appel est entré et/ou au moins un code d'identification est reçu,
que pour la desserte de l'appel et/ou du code d'identification par la commande d'appels de destination (4) et/ou la commande d'ascenseur (5, 5') au moins un trajet d'au moins une cabine d'ascenseur (17, 17') est déterminé,
que pour le trajet d'au moins un dispositif d'analyse (3), au moins une valeur de consommation d'énergie (21) est déterminée,
que le trajet est associé à la ou aux valeurs de consommation d'énergie (21),
que le trajet et la valeur de consommation d'énergie (21) sont sortis sur le dispositif d'entrée d'appels (6),
que pour un trajet, une valeur de consommation d'énergie (21) est sélectionnée, et
que l'appel ou le code d'identification sont desservis par la commande d'appels de destination (4) et/ou la commande d'ascenseur (5, 5') avec le trajet associé à la valeur de consommation d'énergie (21) sélectionnée.

9. Procédé selon la revendication 8, étant précisé
que l'appel entré et/ou le code d'identification reçu sont communiqués par le dispositif d'entrée d'appels (6) à au moins une commande d'appels de destination (4) et/ou à la commande d'ascenseur (5, 5'),
que le trajet déterminé est communiqué à au moins un dispositif d'analyse (3),
que le trajet et la valeur de consommation d'énergie (21) sont communiqués au dispositif d'entrée d'appels (6), et
qu'une valeur de consommation d'énergie (21) sélectionnée pour un trajet est communiquée par le dispositif d'entrée d'appels (6) à la commande d'appels de destination (4) et/ou à la commande d'ascenseur (5, 5').

10. Procédé selon l'une des revendications précédentes, étant précisé que la valeur de consommation d'énergie (21) de l'installation d'ascenseur (1) est déterminée avant l'installation de celle-ci, et ladite installation d'ascenseur (1) est installée avec la valeur de consommation d'énergie (21) déterminée.

11. Procédé selon la revendication 10, étant précisé que pour la valeur de consommation d'énergie (21) déterminée pour l'installation d'ascenseur (1) avant l'installation de celle-ci, au moins un certificat de garantie de consommation d'énergie est sorti, selon lequel il est garanti que la valeur de consommation d'énergie (21) réelle de l'installation d'ascenseur (1), une fois la valeur de consommation d'énergie (21) déterminée installée, ne sera pas dépassée.

12. Procédé selon la revendication 11, étant précisé qu'une valeur de consommation d'énergie (21) réelle de l'installation d'ascenseur (1) est comparée, grâce à la détection d'au moins une consommation d'énergie de l'installation d'ascenseur (1) et d'au moins une situation de trafic de l'installation d'ascenseur (1), et à la détermination d'au moins une valeur de consommation d'énergie (21) réelle, à la valeur de consommation d'énergie (21) déterminée, selon le certificat de garantie de consommation d'énergie, en vue de la vérification et/ou de la confirmation de celui-ci.

13. Installation d'ascenseur pour la mise en oeuvre du procédé selon l'une des revendications précédentes,
avec au moins un dispositif d'analyse (3), en particulier un dispositif d'analyse (3) comprenant un dispositif de mesure d'énergie (2, 2', 2") et/ou une commande d'appels de destination (4) et/ou une commande d'ascenseur (5, 5') et/ou un dispositif d'entrée d'appels (6) et/ou un central (7),
étant précisé que le ou les dispositifs d'analyse (3) analysent la consommation d'énergie détectée d'un consommateur d'énergie et la situation de trafic détectée de l'installation d'ascenseur (1), et déterminent la valeur de consommation d'énergie (21),
que la commande d'appels de destination (4) et/ou la commande d'ascenseur (5, 5') détectent
- au moins un nombre d'appels par unité de temps et/ou
- au moins un nombre de passagers qui ont été transportés par l'installation d'ascenseur (1) dans le bâtiment en une unité de temps, et/ou
- au moins une différence de passagers aux étages (S1-S3) du bâtiment qui ont été transportés par l'installation d'ascenseur, en une unité de temps, d'étages d'entrée d'appels jusqu'à des étages de destination, et
que la commande d'appels de destination (4) et/ou la commande d'ascenseur (5, 5') déterminent, à partir du nombre d'appels par unité de temps ou du nombre de passagers transportés ou de la différence de passagers aux étages (S1-S3), la situation de trafic de l'installation d'ascenseur (1).

14. Installation selon la revendication 13, étant précisé qu'au moins un central (7) et/ou au moins un dispositif d'entrée d'appels (6) comprennent le moyen de sortie prévu pour la sortie de la valeur de consommation d'énergie déterminée.
